# EUROPEAN PATENT APPLICATION

(11) **EP 3 495 672 A1**
(43) Date of publication of application: **12.06.2019**
(21) Application number: 18191236.1
(22) Date of filing: 28.08.2018
(51) Int. Cl.: F16B 43/00

(54) **DETACHABLE WASHER FOR PREVENTING LOOSENING**

(30) Priority: 11.12.2017 KR 20170169247
(71) Applicant: Findmold Co., Ltd., Cheongju-si, Chungcheongbuk-do 28644 (KR)
(72) Inventor: YOON, Yeo Been, 35207 Seo-gu, Daejeon (KR); SON, Heung Sik, Chungcheongbuk-do 28448 (KR)
(74) Representative: Studio Torta S.p.A.

(57) **Abstract**

Provided is a detachable washer for preventing loosening by preventing the bolt or the nut fastened to a fastening target from being easily rotated in a loosening direction, by using the magnetic force of a magnet (200) and structural features of a polygonal groove portion (300). For this purpose, the detachable washer for preventing loosening includes: a washer provided for a fastening target to prevent loosening of a bolt or a nut, the washer including: a body interposed between the nut or a bolt head portion and the fastening target and having a through-hole formed in a center thereof; and a magnet provided in the body to generate a magnetic force toward both sides of the body, wherein a polygonal groove portion corresponding to the nut or the bolt head portion is formed in one side of the body.

## Description

### CROSS-REFERENCE TO RELATED APPLICATION

This application claims the benefit of Korean Patent Application No. 10-2017-0169247, filed on December 11, 2017, in the Korean Intellectual Property Office, the disclosure of which is incorporated herein in its entirety by reference.

### BACKGROUND

### 1. Field

One or more embodiments relate to a detachable washer for preventing loosening, and more particularly, to a detachable washer for preventing loosening that may suppress the loosening rotation of a fastening unit dually both inside and outside the washer to prevent the fastening unit from being easily loosened in the event of a vibration at a fastening target.

### 2. Description of the Related Art

In general, bolts and nuts are widely used in various fields, such as in the assembly of automobile parts, electronic parts, and furniture, to fasten and assemble two or more separate objects into a single body. A bolt/nut fastening structure according to the related art includes a bolt inserted into a fastening target, which is an object to be fastened, and a nut screw-fastened to the bolt. In order to improve the fastening force of the bolt and the nut and prevent the loosening thereof due to external impacts and vibrations, a washer is tightly inserted inside the bolt and the nut.

In order to fasten a fastening target with the bolt/nut fastening structure, the bolt is passed through an insertion hole formed in the fastening target and then the nut is fastened to a screw portion of the bolt such that the nut is screw-fastened to the bolt. Accordingly, the fastening target is fixed by the bolt and the nut. In this case, the washer is inserted between the bolt and nut to prevent loosening thereof due to external impacts and vibrations.

However, the bolt/nut fastening structure has a limitation in that the fastening force with respect to the fastening target is weakened or lost because the fastening force of the nut is easily released from the bolt due to external impacts and vibrations. In order to solve this limitation, the washer is inserted to maintain the fastening force of the bolt and the nut. However, even in this case, since the fastening force may be weakened after a long period of time, it may be difficult to completely maintain the fastening force of the bolt and the nut.

In order to solve this limitation, various techniques have recently been developed to prevent a bolt and a nut from being loosened after being fastened together.

As an example, Korean Patent Application Publication No. 1999-019896 discloses an anti-loosening structure of a bolt and a grooved nut in which a plurality of fixing feet are formed at the tip of a bolt body and fixing grooves are formed in the grooved nut for insertion of and coupling with the plurality of fixing feet, and thus, when the bolt and the grooved nut are fastened together and then the fixing feet are bent and fixed, the fixing feet restrain the separation of the nut to prevent the loosening of the bolt and the nut.

However, the bolt/nut anti-loosening structure according to the related art may have a complex configuration, and a series of processes for fastening and loosening the bolt and the nut may be very troublesome.

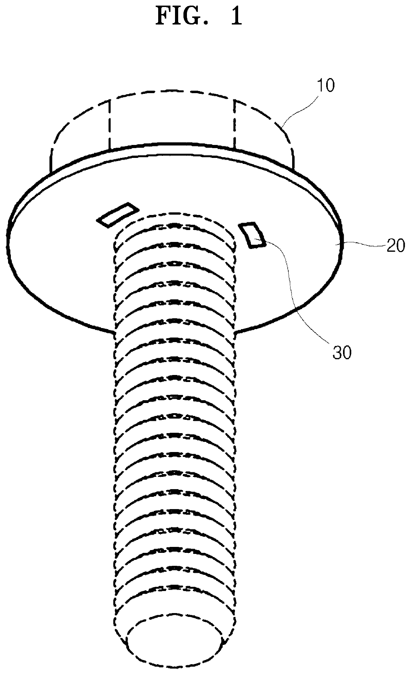

In order to solve this limitation, as illustrated in FIG. 1, a washer 20 is integrally formed at a bolt head portion 10, and a magnet 30 is inserted and fixed into the washer 20 such that, in a fastening process, an operation may be performed in a state in which a bolt is attached to a fastening target.

However, when the washer 20 is integrally formed with the bolt head portion 10 as in the related art, there are the following problems.

First, when the bolt head portion 10 and the washer 20 are integrally formed, since a mold should be manufactured separately for each size, the manufacturing cost of the mold may increase, and thus the overall manufacturing cost may increase.

Second, the washer 20 may be damaged according to the surface flatness of an object in the process of fastening the object, and in this case, since the bolt head portion 10 and the washer 20 are integrally formed, the entire bolt should be replaced, and thus, efficiency may be reduced.

### SUMMARY

One or more embodiments include a detachable washer preventing loosening that may prevent a fastening unit from being easily loosened even in the event of a vibration at a fastening target, by suppressing the rotation of the fastening unit through the configuration of a polygonal groove portion and an attachment force caused by a magnetic force.

One or more embodiments include a detachable washer for preventing loosening that may be easily applied to and used with a general-purpose fastening unit by being detachably attached to the fastening unit through a magnetic force, and which may provide improved maintenance convenience and a reduction in costs by being easily replaceable.

Additional aspects will be set forth in part in the description which follows and, in part, will be apparent from the description, or may be learned by practice of the presented embodiments.

According to one or more embodiments, a detachable washer for preventing loosening includes: a washer provided for a fastening target to prevent loosening of a bolt or a nut, the washer including: a body interposed between the nut or a bolt head portion and the fastening target and having a through-hole formed in a center thereof; and a magnet installed in the body to generate a magnetic force toward both sides of the body, wherein a polygonal groove portion corresponding to the nut or the bolt head portion is formed in one side of the body.

In this case, the magnet may be provided as a plurality of magnets and the plurality of magnets may be arranged along an edge of the body.

In this case, a magnet hole penetrating both sides of the body may be formed at each of a plurality of vertex portions of the polygonal groove portion, and the magnets may be inserted into and installed in the magnet holes, respectively.

Also, the body may include a metal or an injection-molded resin material.

The detachable washer for preventing loosening according to the present disclosure may have the following effects.

First, since the fastening unit such as the bolt or the nut is attached to the fastening target by using the magnetic force, the rotation of the fastening unit in the loosening direction may be maximally suppressed even in the event of a vibration at the fastening target. Accordingly, the anti-loosening force of the fastening unit may be maximized.

Second, since the attachment force with the fastening target may be increased through the magnetic force, the washer may be manufactured by injection molding. That is, even when the material of the washer is formed of a resin material, the fastening force may be increased by preventing the fastening unit from being easily loosened, by the magnetic force of the magnet. Accordingly, the number of uses thereof may be increased in various ways and the manufacturing cost thereof may be reduced, and thus, the cost of the washer may be reduced.

Third, since it may not be necessary to manufacture the bolt or the nut integrally with the washer, it may not be necessary to separately manufacture a mold for each bolt and nut size. That is, since the washer may be used by attachment/detachment to/from the general-purpose fastening unit, the manufacturing cost of the bolt and the nut may be reduced. Accordingly, economical efficiency may be improved.

Fourth, the maintenance cost thereof may be reduced. When the washer is damaged, since only the washer may be replaced without the need to replace the entire bolt and nut, economical efficiency may be improved by reducing maintenance costs.

### BRIEF DESCRIPTION OF DRAWINGS

FIG. 1 is a bottom perspective view of a bolt according to the related art in which a washer mounted with magnets is integrally formed at a bolt head portion;
FIG. 2 is a perspective view illustrating a nut and a detachable washer for preventing loosening, according to an embodiment of the present disclosure;
FIG. 3 is a bottom perspective view illustrating a state in which a nut is coupled to a detachable washer for preventing loosening, according to an embodiment of the present disclosure;
FIG. 4 is a cross-sectional view illustrating a state in which a detachable washer for preventing loosening, according to an embodiment of the present disclosure, is coupled to a nut and then attached to a fastening target;
FIG. 5 is a cross-sectional view illustrating a state in which a washer for preventing loosening, according to an embodiment of the present disclosure, is coupled to a nut and then a bolt is coupled to a fastening target; and
FIGS. 6 and 7 are respectively a perspective view and a cross-sectional view illustrating a state in which a detachable washer for preventing loosening, according to another embodiment of the present disclosure, is provided and used with a bolt.

### DETAILED DESCRIPTION

The terms or words used in the specification and the claims are not limited to the general or bibliographical meanings, but are merely used to enable a clear and consistent understanding of the present disclosure.

Hereinafter, a detachable washer for anti-loosening according to an embodiment of the present disclosure will be described with reference to FIGS. 1 to 5.

Since the detachable washer for anti-loosening may be detachably attached to a fastening unit by a magnet disposed therein and may also be attached to a fastening target by a magnetic force, even when a vibration occurs at the fastening target, a bolt and a nut as the fastening unit may be suppressed from being rotated in a loosening direction.

In this case, the washer may have a polygonal groove portion formed to receive a bolt head portion or the nut to prevent the bolt or the nut from being easily rotated on the washer.

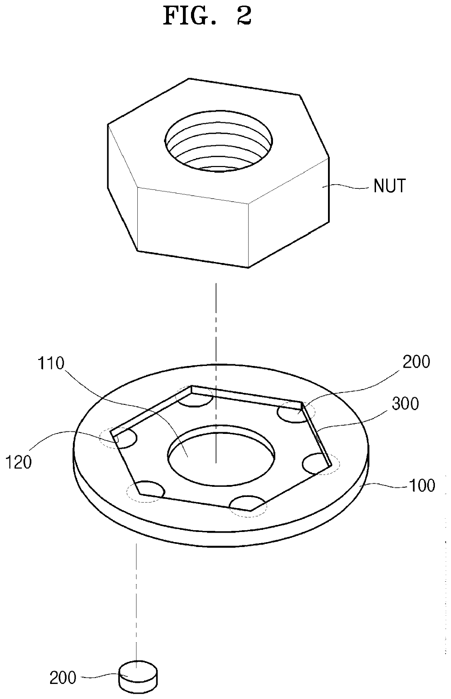

As illustrated in FIG. 2, the detachable washer for anti-loosening may include a body 100, a magnet 200, and a polygonal groove portion 300.

The body 100 may constitute the external appearance of the washer and may be formed in a circular shape.

That is, the body 100 may form a general washer appearance.

The body 100 may be formed of a metal, and a through-hole 110 may be formed at the center of the body 100.

The through-hole 110 may be a passage through which a screw portion of the bolt passes when the bolt and the nut are fastened together.

Meanwhile, in the body 100, a plurality of magnet holes 120 may be formed along the edge of the body 100.

The magnet hole 120 may be formed to insert and fix the magnet 200 and to penetrate the polygonal groove portion 300 in the vertical direction, which will be described below.

In this case, a portion of the magnet hole 120 may be shielded by the body 100, which will be described below in detail.

Next, the magnet 200 may generate a magnetic force for attaching the fastening unit to the body 100 of the washer, in addition to a magnetic force for attaching the body 100 of the washer to the fastening target.

The magnet 200 may be inserted and fixed into the magnet hole 120 of the body 100.

In this case, the magnet 200 may be formed in a shape corresponding to the magnet hole 120, a portion of one side of the magnet hole 120 may be shielded by the body 100, and the magnet 200 may be inserted and installed through the other side of the magnet hole 120 of the body 100.

As such, since a portion of one side of the magnet hole 120 is shielded by the body 100 as illustrated in FIG. 2, while the magnet 200 is being inserted through the other side of the magnet hole 120 of the body 100, the end of the magnet 200 may interfere with the body 100 and thus the position of the magnet 200 may be easily guided as a stopper function is performed.

When the magnet hole 120 is formed through the polygonal groove portion 300 in the vertical direction, the insertion height of the magnet 200 may not be uniform in the process of inserting the magnet 200 into the magnet hole 120.

That is, since a plurality of magnets 200 may not be provided at a uniform height on the polygonal groove portion 300, when the nut is received in the polygonal groove portion 300, the insertion balance of the nut may also be disturbed.

Accordingly, as described above, since a portion of one side of the magnet hole 120 is covered by the body 100 and this configuration provides a stopper function, the balance may be easily and uniformly maintained during the installation of the magnet 200.

Next, the polygonal groove portion 300 may function to receive the nut on the washer and may be formed in the shape of a groove along the edge of the body 100 with respect to the through-hole 110 of the body 100.

The nut and the bolt head portion may be generally formed in a polygonal shape, and the polygonal groove portion 300 may be formed in a polygonal shape corresponding thereto.

In this case, since the nut is generally provided in a hexagonal shape, the polygonal groove portion 300 may also be formed in a hexagonal shape as illustrated in FIG. 2. In this case, as described above, the polygonal groove portion 300 may be formed to be stepped downward from the body 100 while intersecting a portion of one side of the magnet hole 120 of the body 100.

In this case, the magnet hole 120 may be formed at each vertex of the polygonal groove portion 300, and accordingly, the magnet 200 may be installed corresponding to the vertex of the polygonal groove portion 300.

Meanwhile, although not illustrated, the magnet 200 may be annularly installed at the body 100.

That is, instead of including a plurality of individual bodies, the magnet 200 may be integrally formed in a ring type and then installed at the body 100.

Hereinafter, the use of the above washer for anti-loosening will be described.

An example in which the washer is applied to the nut will be described.

The nut may be received in the polygonal groove portion 300.

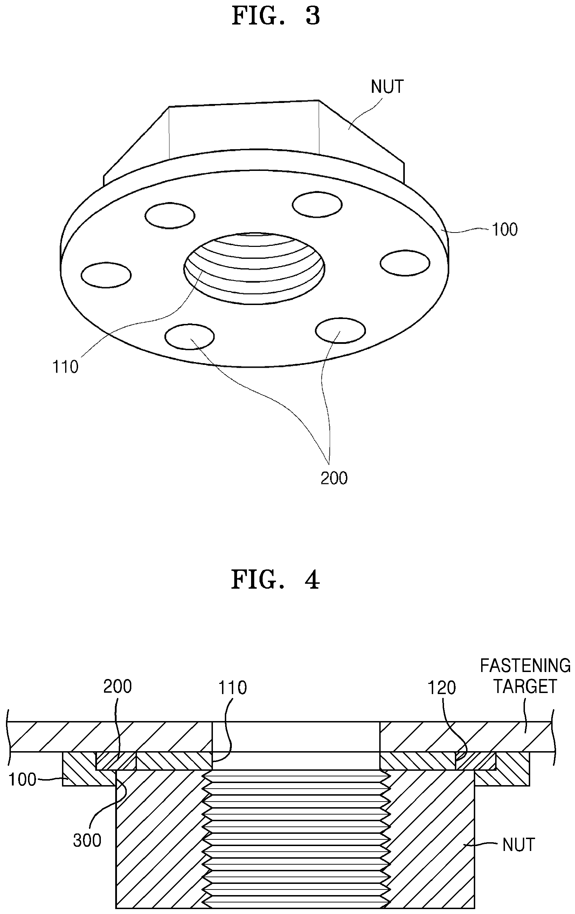

In this case, the nut may be attached onto the polygonal groove portion 300 by the magnet 200 generating a magnetic force on the magnet hole 120 to form a united body with the washer as illustrated in FIG. 3.

Next, the washer coupled with the nut may be attached to the fastening target.

In this case, the washer may be easily attached to the fastening target by the magnetic force of the magnet 200, and the through-hole 110 of the washer may correspond to a through-hole of the fastening target.

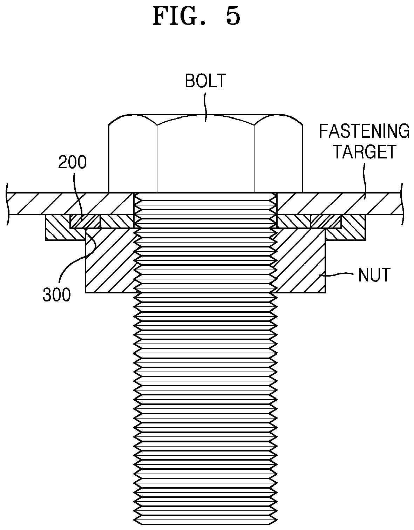

Next, as illustrated in FIG. 5, the bolt and the nut may be fastened to each other and then fastened to the fastening target.

In this case, since the bolt and the nut may provide a fastening force to the fastening target through the screw-fastening and simultaneously the magnet 200 coupled to the washer may be magnetically attached to the fastening target as illustrated in FIG. 5, the fastening force of the bolt and the nut may be maximized.

Meanwhile, in the state where the bolt and the nut are fastened as described above, even when a vibration occurs at the fastening target, the bolt and the nut may not be easily loosened.

When a vibration occurs continuously at the fastening target, the nut may rotate in the loosening direction. However, since the washer coupled with the nut is magnetically attached to the fastening target, the loosening rotation of the nut may be suppressed and thus the loosening of the bolt and nut may be maximally suppressed.

In addition, since the nut is inserted into the polygonal groove portion 300 of the washer, the nut may be suppressed from rotating by interfering on the polygonal groove portion 300.

That is, even when a rotational force is generated in the loosening direction at the nut, the nut may be locked on the polygonal groove portion 300 of the same polygonal shape and thus the nut may not be easily rotated.

As may be seen from this, the rotation of the nut may be suppressed inside and outside the washer and thus the nut may be prevented from being loosened from the fastening target.

That is, since the magnet 200 of the washer is attached to the fastening target to primarily provide a rotation restraining force to the nut and the hexagonal nut is engaged with the polygonal groove portion 300 of the washer to secondarily provide a rotation restraining force to the nut, even when a vibration occurs at the fastening target, the loosening rotation of the nut may be maximally suppressed.

Accordingly, by the detachable washer for anti-loosening, the fastening force of the bolt and the nut may be prevented from being easily released.

Meanwhile, the detachable washer for anti-loosening may be used by being attached not only to the nut but also to the bolt head portion, and the material thereof may be provided as a resin material formed of an injection-molded material.

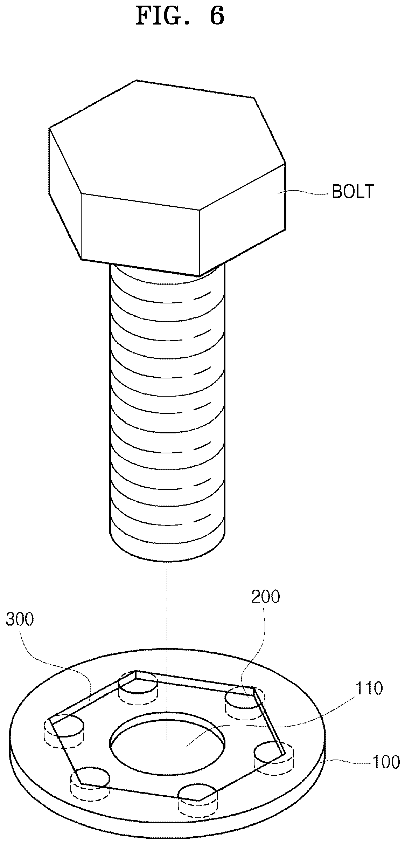

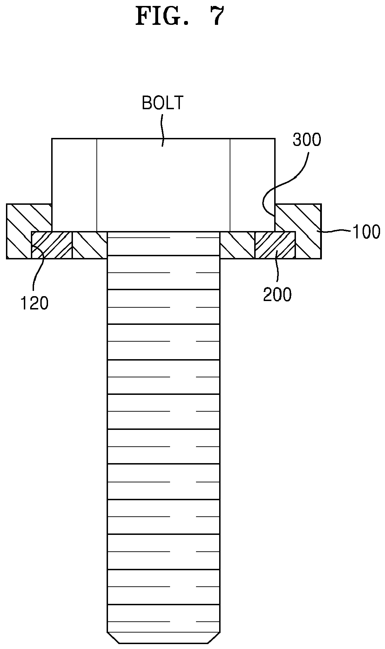

This will be illustrated as another embodiment of the present disclosure and will be described with reference to FIGS. 6 and 7.

In the following description, like reference numerals will denote like elements as in the above embodiments and redundant descriptions thereof will be omitted for conciseness.

As illustrated in FIGS. 6 and 7, the detachable washer for anti-loosening may be provided as plastic and may be used by being attached to the bolt head portion.

That is, the detachable washer for anti-loosening may improve the installation rigidity by increasing the attachment force to the fastening target by the installation of the magnet 200, and may prevent the rotation of the bolt in the loosening direction because the rotation of the washer is suppressed even when a vibration occurs as the fastening target.

When a plastic washer is provided simply without the magnet 200, since the bolt may be easily rotated and loosened even by a small vibration, the plastic washer without the magnet 200 will be difficult to manufacture.

However, since a plastic washer may be provided through the attachment of the magnet 200, the manufacturing cost of the washer may be reduced and thus the use thereof may be diversified.

As described above, the detachable washer for anti-loosening according to the present disclosure is designed to maximally suppress the rotation of the bolt or the nut in the loosening direction through the configuration of the magnet 200 and the polygonal groove portion 300.

That is, since the loosening rotation of the bolt or the nut is primarily suppressed through the magnet attachment and the loosening rotation of the bolt or the nut engaged with the polygonal groove portion is secondarily suppressed, the force of preventing the loosening of the bolt and the nut from the fastening target may be maximized.

Particularly, even when a vibration occurs at the fastening target, since the rotation of the bolt and the nut in the loosening direction may be suppressed by the washer, the bolt and the nut may not be easily loosened.

Accordingly, the satisfaction of the user may be improved and the use thereof may be diversified.

While the present disclosure has been described above in detail with reference to example embodiments thereof, those of ordinary skill in the art will readily understand that various changes and modifications may be made therein without departing from the spirit and scope of the present disclosure defined in the appended claims.

## Claims

1. A detachable washer for preventing loosening, the detachable washer comprising: a washer provided for a fastening target to prevent loosening of a bolt or a nut,
the washer comprising:
a body interposed between the nut or a bolt head portion and the fastening target and having a through-hole in a center thereof; and
a magnet installed in the body to generate a magnetic force toward both sides of the body,
wherein a polygonal groove portion corresponding to the nut or the bolt head portion is formed in one side of the body.

2. The detachable washer of claim 1, wherein the magnet is proved as a plurality of magnets and the plurality of magnets are arranged along an edge of the body.

3. The detachable washer of claim 2, wherein a magnet hole penetrating both sides of the body is formed at each of a plurality of vertex portions of the polygonal groove portion, and the magnets are inserted into and installed in the magnet holes, respectively.

4. The detachable washer of claim 1, wherein the body comprises a metal or an injection-molded resin material.
